# EUROPEAN PATENT SPECIFICATION

(11) **EP 0 375 335 B1**
(45) Date of publication and mention of the grant of the patent: **18.09.1996**
(21) Application number: 89313241.5
(22) Date of filing: 18.12.1989
(51) Int. Cl.: G05D 23/12

(54) **Improvements in or relating to thermoscopic units**
Thermostatische Einheiten
Ensembles thermostatiques

(30) Priority: 22.12.1988 GB 8829914
(43) Date of publication of application: 27.06.1990
(73) Proprietor: CARADON MIRA LIMITED, Cheltenham Gloucestershire GL52 5EP (GB)
(72) Inventor: North, Royston Jesse, Cheltenham Gloucestershire GL52 4AD (GB)
(74) Representative: Knowles, Audrey Elizabeth

(56) References cited:
- EP-A- 0 318 208
- GB-A- 879 772
- GB-A- 2 020 427
- GB-A- 2 081 443
- DESIGN ENGINEERING, October 1981, pages 11-13, London, GB; "Thermo-sensitive bellows improves mixer valve operation"

## Description

This invention concerns improvements in or relating to thermoscopic units of the type in which change of volume of a thermally responsive material contained in a closed expansion chamber is transmitted to an actuator.

Thermoscopic units of the above type have application to a wide range of thermostatic devices for controlling fluid flow. One particular application is to mixing valves for ablutionary appliances such as baths, showers, washbasins, bidets and the like. For such application, the thermoscopic unit is arranged to sense the temperature of pre-conditioned water supplied to the appliance and responsive movement of the actuator to change in volume of the thermally responsive material is used to adjust a proportioning valve for hot and cold water to maintain the selected temperature of the pre-conditioned water substantially constant. The pre-conditioned water may be cold or hot water or a blended mixture thereof as selected by the user.

A thermoscopic unit is known from UK Patent No.2020427 in which change in volume of the thermally responsive material is transmitted to the actuator by a metal bellows unit.

A disadvantage of such known unit is that the speed of response, which is determined by the surface area to volume ratio of the thermally responsive material, is limited by the minimum diameter which the bellows unit can have. As a result, pre-conditioned water at a temperature higher than that selected may be obtained before the thermoscopic unit responds to adjust the valve to provide water of the selected temperature. This can result in the user being scalded by a sudden shot of hot water and is a particular problem when the valve is operated from cold with the hot water port fully open. In this condition, a 12°C overshoot of the selected temperature can occur which peaks at 5 seconds and is gone within 15 seconds. In addition, smaller temperature variations can arise during operation due to fluctuations in the supply pressures as well as other factors affecting the water flow.

Another disadvantage of such known until is that the return force applied to reduce the effects of hysteresis is limited by the pressure which can be exerted without distorting or rupturing the bellows unit. In practice, the maximum usable force is about 60 Newtons and this has limitations on the size and range of mixing valve which can be controlled.

Yet another disadvantage of such known unit is corrosion of the metal bellows where the water is particularly aggressive.

Another thermoscopic unit is known from UK Patent Application No.2081443 in which change of volume of the thermally responsive material is transmitted to the actuator by a diaphragm having an integral piston which is axially movable within a guide for the actuator. With this arrangement, the volume of thermally responsive material may be reduced as compared with the above-mentioned bellows unit thereby enabling the surface area to volume ratio to be increased leading to a faster speed of response.

A disadvantage of this unit is that a space is left between the guide and the diaphragm where it is joined to the piston with the result that air trapped in the space will compress causing a loss of rigidity leading to inaccuracies in the response of the unit.

A thermoscopic unit is also known from UK Patent No.879772 in which a deformable rubber plug is interposed between the actuator and a diaphragm responsive to change in volume of the thermally responsive material. The plug is located in a stepped bore of the guide such that expansion of the thermally responsive material effects a multi-stage squeezing of the plug causing elongation of the plug to give an increased movement of the actuator.

It is an object of the present invention to provide a thermoscopic unit that has a rapid response to change in temperature and which is reliable and accurate in operation even after a prolonged period of use.

It is a further object of the invention to provide a thermoscopic unit that is of simple construction facilitating manufacture and assembly.

It is another object of the invention to provide a thermoscopic unit having improved load capability for application to a wide range of sizes and types of thermostatic devices.

It is preferred object of the invention to provide a thermoscopic unit having increased actuator stroke length for controlling larger thermostatic devices.

According to the present invention there is provided a thermoscopic unit for a thermostatic device such as a mixing valve for an ablutionary appliance, the unit comprising a guide member, an actuator slidable in the guide member, the actuator having an outer end for operative connection to a thermostatic device and an inner end separated from the outer end by a low friction bearing, a hollow body defining an expansion chamber containing a thermally responsive material, and a diaphragm having an elastically deformable centre portion and a peripheral edge portion of increased thickness, the edge portion being located and retained between the body and the guide member to close the expansion chamber, and the centre portion being arranged to transmit change of volume of the thermally responsive material to the inner end of the actuator characterised in that the guide member is formed with a bore of uniform cross-section throughout the length in which the inner end of the actuator is slidable.

The main advantage of the invention is that the diameter of the bore in the guide member can be reduced so that the same effective actuator stroke is obtained with less thermally responsive material enabling the surface area to volume ratio to be increased producing a faster speed of response.

Advantageously, the centre portion of the diaphragm has a thickness in the range 0.3mm to 1.5mm thick such that elastic expansion/contraction of the centre portion to transmit change of volume of the thermally responsive material to the actuator is fast, accurate and reliable.

Preferably, the centre portion of the diaphragm is of uniform thickness, though a variable thickness may be used, for example to maximise the stroke and spread the strain.

Advantageously, the edge portion of the diaphragm is located in a recess in the body or guide member. This enables higher loads to be applied to the diaphragm thereby reducing the effects of hysteresis.

Preferably, the edge portion of the diaphragm is oversize so as to be compressed within the recess to assist sealing and retention of the periphery of the diaphragm

Preferably, the expansion chamber is connected to a reservoir arranged externally of the body and containing the thermally responsive material. In this way, the surface area to volume ratio is increased ensuring rapid and uniform response of the thermally responsive material to change of temperature.

In a preferred construction, the reservoir comprises a coiled tube encircling and radially spaced from the body so as to allow free flow of fluid over the outer surface of the body and the coil.

Advantageously, the thermally responsive material is selected to have a substantially uniform change in volume per unit temperature change over a given operating temperature range.

Particularly preferred are materials that undergo a phase change from solid to liquid to gas over the operating temperature range. Such materials provide a uniform high rate of expansion over the operating temperature range whereby the accuracy of the unit is improved.

Preferably, the thermal conductivity of the thermally responsive material is enhanced by the addition of a substance having a high thermal conductivity, for example finely divided metal particles or dust. In this way the speed of response of the unit to temperature change is further increased.

Advantageously, the inner end of the actuator is made of elastomeric material similar to the diaphragm, for example rubber, thereby reducing wear and/or damage to the diaphragm and the outer end of the actuator is made of corrosion resistant material, for example stainless steel.

Preferably, the low friction bearing comprises a disc or washer of low friction material, for example PTFE, which permits rotation of the outer end of the actuator relative to the inner end whilst carrying a thrust load.

Advantageously, the outer end of the actuator is sealed relative to the guide member by a flexible boot permitting axial displacement of the actuator whilst preventing ingress of fluid and/or detritus.

The expansion chamber may be closed at opposite ends by a pair of diaphragms for transmitting change of volume of the thermally responsive material to a corresponding pair of actuators.

With this arrangement, the actuators are preferably aligned for simultaneous axial displacement in opposed senses. In this way, the stroke length is increased whilst maintaining the advantages of fast response, reliability and accuracy of the unit.

By the use of common components for units having one or two actuators, manufacture and assembly is facilitated.

The invention will now be described in more detail, by way of example only, with reference to the accompanying drawings wherein:-
FIGURE 1 is a side elevation of a first embodiment of a thermoscopic unit according to the present invention;
FIGURE 2 is a longitudinal section of the thermoscopic unit shown in Figure 1;
FIGURE 3 is a longitudinal section similar to Figure 2 showing the unit at elevated temperature;
FIGURE 4 is a side elevation of a second embodiment of a thermoscopic unit according to the present invention;
FIGURE 5 is a longitudinal section of the thermoscopic unit shown in Figure 4; and
FIGURE 6 is a diagrammatic view of a mixing valve incorporating the thermoscopic unit according to the present invention.

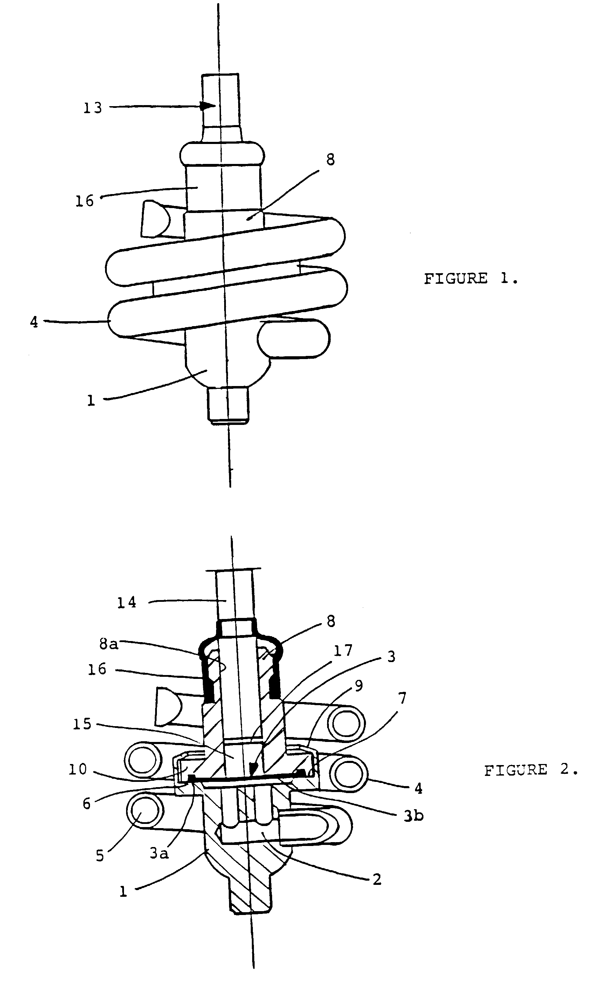

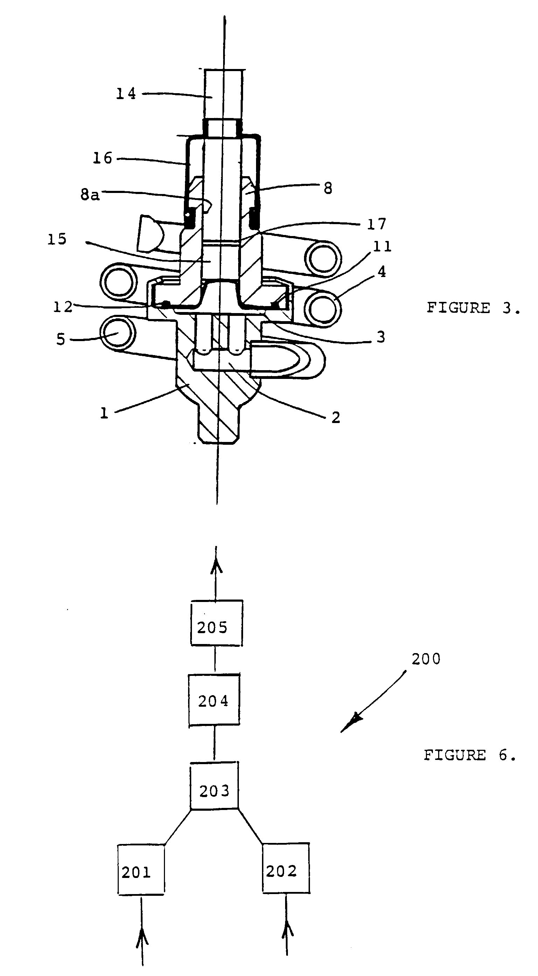

The first embodiment of a thermoscopic unit according to the invention shown in Figures 1 to 3 of the accompanying drawings comprises a hollow body 1 defining an expansion chamber 2 closed at one end of the body 1 by a flexible rubber diaphragm 3.

The expansion chamber 2 is filled with a thermally responsive material, for example a wax, which expands and contracts on temperature changes. The material is selected according to the intended application of the unit so as to have a substantially uniform change of volume per unit temperature change over the operating range of the unit.

According to a preferred feature of the invention, the speed of response of the material to temperature change is increased by the addition of a substance having a high thermal conductivity, for example copper dust, suspended in the material.

The other end of the body 1 is connected to one end of a coiled copper tube 4 forming a series of axially spaced loops radially spaced from and encircling the body 1 over substantially its entire length to allow fluid to flow between the coil and the body 1 and between the loops of the coil.

The tube 4 is closed at the other free end and defines a reservoir 5 communicating with and containing the same thermally responsive material as the chamber 2.

The reservoir 5 substantially increases the surface area to volume ratio of the thermally responsive material so as to improve further the speed of response of the unit to temperature change.

The diaphragm 3 is clamped at the periphery between an end face 6 of the body 1 and an opposed end face 7 of a guide member 8 that is secured to the body 1 on assembly by rolling over or peening a flange 9 extending axially from the end face 6 of the body 1 to engage behind an annular collar 10 of the guide member 8.

The marginal edge portion 3a of the diaphragm 3 is of increased thickness forming an integral lip 11 on one side which is located and retained in an annular groove 12 in the end face 7 of the guide member 8. The lip 11 is oversize so as to be compressed in the groove 12 on assembly so as to improve sealing and retention of the diaphragm 3.

The centre portion 3b of the diaphragm, radially inwards of the lip 11, comprises a thin membrane of uniform thickness, typically 0.8mm, that is supported on one side by the end face 7 of the guide member 8 and is exposed on the other side to the thermally responsive material within the expansion chamber 2.

The centre portion 3b extends across the inner end of a through bore 8a in the guide member 8 and, expansion of the material applies a pressure to the centre portion 3b which stretches into the bore 8a and displaces an actuator 13 slidably mounted in the bore 8a.

The bore 8a is smooth with a smooth radiused entry edge that is lubricated on assembly to facilitate movement of the diaphragm 3 into and out of the bore 8a so as to reduce wear/damage. Advantageously, the unit is assembled under vacuum thereby eliminating completely any air gaps within the unit thereby improving further the accuracy and reliability of the unit.

The actuator 13 comprises a stainless steel operating rod 14 adapted for connection at the outer end to the thermostatic device and a rubber piston 15 interposed between the centre portion 3b of the diaphragm and the inner end of the rod 14.

The rod 14 is sealed intermediate its ends to the guide member 8 by a flexible rubber boot 16 which acts as a shield to prevent ingress of fluid and/or detritus and which stretches to accommodate axial movement of the rod 14.

The rod 14 and piston 15 are separated by a PTFE (polytetrafluoroethylene) disc 17 which acts as a thrust bearing permitting rotation of the rod 14 relative to the piston 15 whilst carrying a thrust load.

In use, the thermoscopic unit is positioned in a fluid flow path to monitor the temperature of the fluid and to respond to changes in the temperature to control operation of a thermostatic device operatively connected to the actuator 13, for example to change the relative proportions in which hot and cold water are mixed so as to maintain a substantially constant temperature.

Hysteresis caused by friction between the diaphragm 3 and the guide member 8 and by hysteresis inherent in the elasticity of the rubber diaphragm 3 may be reduced to an insignificant level by operating the thermoscopic unit against a high load such as a return spring or similar resilient biasing means (not shown). We have found that such load can be up to about 90 Newtons in normal operation as compared with about 60 Newtons for the metal bellows unit of the known thermoscopic units thus providing improved performance.

Another advantage of the invented unit is that by making the centre portion of the diaphragm a relatively thin membrane, typically from 0.3mm to 1.5mm thick, that is readily stretched by increase in volume of the thermally responsive material, the diameter of the bore in the guide member can be reduced thereby reducing the "effective" actuator size. As a result, for the same "effective" actuator stroke, less thermally responsive material is required enabling the surface area to volume ratio to be increased providing for a faster speed of response.

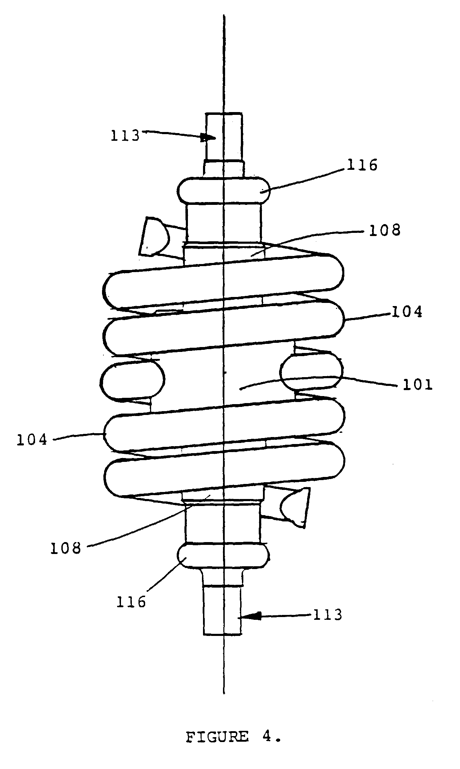

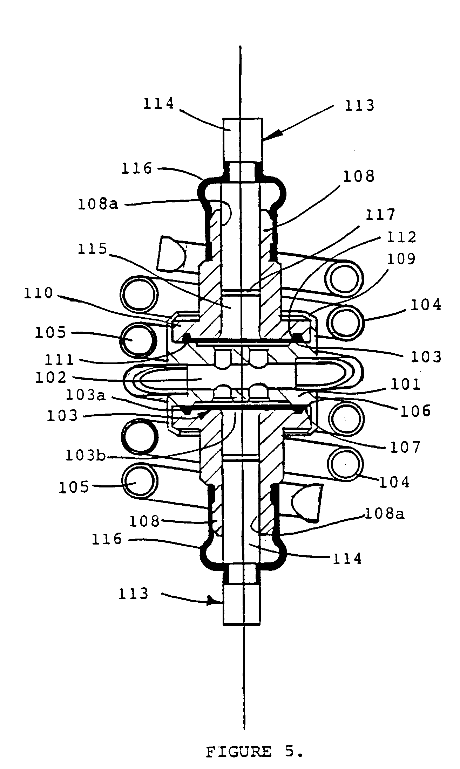

Referring now to the second embodiment of thermoscopic unit according to the present invention shown in Figures 4 and 5, like reference numerals in the 100 series are used to indicate parts corresponding to the first embodiment.

In this second embodiment, hollow body 101 defines an expansion chamber 102 containing thermally responsive material (not shown) closed at opposite ends of the body 101 by respective flexible diaphragms 103.

Intermediate the ends, the body 101 is connected on opposite sides to respective coiled copper tubes 104 that extend in opposite directions and form a series of axially spaced apart loops radially spaced from and encircling the body 101 over substantially its entire length. The tubes are closed at the free ends and define reservoirs 105 in communication with and containing the same thermally responsive material as the expansion chamber 102.

Each diaphragm 103 is similar and is clamped at the periphery between an end face 106 of the body 101 and an end face 107 of a guide member 108 for an actuator 113.

The marginal edge portion 103a of each diaphragm 103 is of increased thickness forming an integral lip 111 that is located in an annular groove 112 in the end face 107 of the associated guide member 108 to assist sealing and retention of the diaphragm 103 under load. Radially inwards of the lip 111, each diaphragm 103 is of substantially uniform thickness, typically 0.8mm.

Each actuator 113 is similar and comprises a stainless steel operating rod 114 and a rubber piston 115 separated by a PTFE disc 117. The rod 114 is sealed to the associated guide member 108 by a flexible rubber boot 116.

The operation of this second embodiment is similar to that of the first embodiment above-described with expansion of the thermally responsive material in the chamber 102 applying a pressure to the centre portion 103b of each diaphragm which stretches into the bore 108a of the associated guide member 108 to displace simultaneously the actuators 113 in opposite directions. In this way, a greater range of stroke can be obtained without any of the problems associated with simple increase in size of the first embodiment to provide the same stroke. For example, to scale up the linear dimension of the first embodiment by a factor of 2 to provide the same stroke as the double ended version of the second embodiment increases areas by 4 and volumes by 8. The increased size of the body would be less capable of withstanding the same internal pressures and the operating forces would have to be increased substantially to keep the hysteresis down to acceptable levels.

A further advantage of increasing the stroke by the double ended arrangement of the actuators 113 is that, many of the same components can be used for both the single actuator and double actuator units above-described. In this way, manufacture and assembly is facilitated and costs can be reduced by such use of common components for different units.

Referring now to Figure 6, there is shown in diagrammatic form a thermostatic device comprising a mixing valve 200 for an ablutionary installation such as a shower, bath, washbasin or bidet. The precise construction of the valve 200 is not shown as such details form no part of this invention and the general description given below is sufficient for understanding of the application of the invented thermoscopic unit in such valves. Those skilled in the art will appreciate that the invented thermoscopic unit has application to all types of mixing valve having the general construction now described.

The valve 200 comprises separate inlets 201 and 202 for hot and cold water respectively, a proportioning valve 203 for controlling the relative proportions in which the hot and cold water are delivered to a mixing chamber 204 and an outlet 205 for supply of preconditioned water to an ablutionary appliance. Preconditioned water may be hot or cold water or a blended mixture of hot and cold water as selected by the user through appropriate control means such as a manually operable control knob (not shown) for setting the required temperature of the preconditioned water.

To maintain constant the selected temperature of the preconditioned water, a thermoscopic unit according to either the first or second embodiments above-described is positioned in the mixing chamber 204 to monitor the temperature of the preconditioned water. Any variation in the temperature from that selected results in a change of volume of the thermally responsive material which is transmitted to the actuator(s) via the diaphragm(s) with axial displacement of the actuator(s) being utilised to adjust the proportioning valve 203 to return the temperature to that selected.

We have found that for both embodiments of the invented thermoscopic unit above-described, a fast speed of response to change in temperature of the preconditioned water is obtained which is of particular benefit when the unit is used in a mixing valve as above-described.

Thus, we have found that when the mixing valve is used after having been off for some time, any temperature overshoot is only about 2°C and is dissipated so quickly as to be difficult to discern. As a result, the risk of the user being scalded by a shot of water having a temperature substantially higher than that selected is considerably reduced. This is especially advantageous where such valves are used to supply ablutionary appliances for use by children or the elderly.

The invented thermoscopic unit is not limited to the embodiments above-described. For example, the reservoir(s) provide an extended surface area for heat exchange between the thermally responsive material and the fluid being monitored and may be of any suitable shape to provide any desired surface area to volume ratio. The reservoir(s) may also be made from any suitable materials having a high thermal conductivity to provide rapid heat transfer between the thermally responsive material and the fluid being monitored. For certain applications, the reservoir(s) may be dispensed with.

The diaphragm(s) may be made of any suitable material having sufficient elasticity and strength for the elastic deformation of the diaphragm under load and the edge portion of increased thickness may be of any suitable size and shape to ensure effective location and retention of the diaphragm(s) under load.

The piston and rod of the actuator(s) may be made of any suitable materials but in general it is preferred that the piston be made of similar material to the diaphragm to reduce wear and/or damage qf the diaphragm and that the rod be made of a material resistant to the effects of the environment in which the unit is to be used.

The thermally responsive material may be of any suitable type for the intended application of the thermoscopic unit, for example waxes, liquids or gases may be used to provide any desired rate of displacement of the actuator(s) in response to temperature change sensed by the unit. Similarly, any suitable additive may be used to increase the thermal conductivity of the material as desired, for example finely divided metallic powder or dust.

For thermostatic devices comprising a mixing valve for ablutionary installations, it is preferred that the thermally responsive material is selected to provide a uniform change of volume per unit degree of temperature change over the ablutionary operating temperature range, typically from 30°C to 60°C.

Particularly preferred materials are waxes which undergo a phase change from solid to liquid over the ablutionary operating temperature range with the phase change being completed at the upper end of the range. Such materials provide a uniform high rate of expansion over the ablutionary operating temperature range and a reduced rate of expansion at higher temperatures.

In this way a substantial proportion of the displacement of the actuator is utilised for adjustment of the thermostatic device over the ablutionary operating temperature range and only a small proportion is utilised for the temperature overload condition thereby providing improved sensitivity of the thermoscopic unit to temperature variation within the operating temperature range of the thermostatic device.

Other modifications will be apparent to those skilled in the art and it will be understood that the invented thermoscopic unit has application to a wide range of mixing valves for controlling the temperature of preconditioned water provided by such valves for both ablutionary installations as above-described and other installations where accurate control of the water temperature is required. For example, a mixing valve for controlling water temperature in a process or reaction such as process control of photographic developing where the preferred operating temperature range may be lower than for the ablutionary installation above-described, say 20°C to 40°C.

It will also be understood that the invented thermoscopic unit has application to thermostatic devices other than the mixing valves above-described. For example in shut-off devices for ablutionary shower heads which prevent dangerously hot water issuing from the shower head. Such device would be a thermally responsive closure valve fitted in or close to the shower head as a scald protection device where rapid response times are essential.

Another application of the invented thermoscopic unit is to a device in which there is automatic control of temperature using a feedback loop where the response time of the whole loop is important in obtaining stability of the control circuit. For example, in instantaneous water heaters where the control system is used to give a constant temperature of water from the heater. In a gas heater, the thermoscopic unit would sense the water temperature and control the gas to the burner. In an electric heater, the thermoscopic unit would sense the water temperature and adjust the flow through the heater or a flow by-passing the heater and being mixed with the heated water.

## Claims

1. A thermoscopic unit for a thermostatic device such as a mixing valve for an ablutionary appliance, the unit comprising a guide member (8;108), an actuator (13;113) slidable in the guide member (8;108), the actuator (13;113) having an outer end (14;114) for operative connection to a thermostatic device and an inner end (15;115) separated from the outer end (14;114) by a low friction bearing (17;117), a hollow body (1;101) defining an expansion chamber (2;102) containing a thermally responsive material, and a diaphragm (3;103) having an elastically deformable centre portion (3b;103b) and a peripheral edge portion (3a;103a) of increased thickness, the edge portion (3a;103a) being located and retained between the body (1;101) and the guide member (8;108) to close the expansion chamber (2;102), and the centre portion (3b;103b) being arranged to transmit change of volume of the thermally responsive material to the inner end (15;115) of the actuator (13;113) characterised in that the guide member (8;108) is formed with a bore (8a;108a) of uniform cross-section throughout the length in which the inner end (15;115) of the actuator (13;113) is slidable.

2. A thermoscopic unit according to Claim 1 characterised in that the centre portion (3b;103b) of the diaphragm (3;103) has a thickness in the range 0.3mm to 1.5mm.

3. A thermoscopic unit according to Claim 1 or Claim 2 characterised in that the centre portion (3b;103b) of the diaphragm (3;103) is of constant thickness.

4. A thermoscopic unit according to any one of the preceding Claims characterised in that the edge portion (3a;103a) of the diaphragm (3;103) is located in a recess (12;112) in the body (1;101) or guide member (8;108), and is preferably oversize so as to be compressed within the recess (12;112).

5. A thermoscopic unit according to any one of the preceding Claims characterised in that the expansion chamber (2;102) is connected to a reservoir (5;105) arranged externally of the body (1;101) and containing the thermally responsive material.

6. A thermoscopic unit according to any one of the preceding Claims characterised in that the thermally responsive material undergoes a phase change and has a substantially uniform change in volume per unit temperature change over the operating temperature range.

7. A thermoscopic unit according to any one of the preceding Claims characterised in that the thermal conductivity of the thermally responsive material is enhanced by the addition of a substance having a high thermal conductivity such as finely divided metal particles or metal dust, for example copper dust.

8. A thermoscopic unit according to any one of the preceding Claims characterised in that the inner end (15;115) of the actuator (13;113) is made of elastomeric material similar to the diaphragm (3;103), for example rubber, and the outer end (14;114) of the actuator (13;113) is made of corrosion resistant material, for example stainless steel.

9. A thermoscopic unit according to any one of the preceding Claims characterised in that the low friction bearing (17;117) comprises a disc or washer (17;117) of low friction material, for example PTFE.

10. A thermoscopic unit according to any one of the preceding Claims characterised in that the outer end (14;114) of the actuator (13;113) is sealed relative to the guide member (8;108) by a flexible boot (16;116).

11. A thermoscopic unit according to any one of the preceding Claims characterised in that the expansion chamber (102) is closed at opposite ends of the body (101) by a pair of diaphragms (103) for transmitting change in volume of the thermally responsive material to a corresponding pair of actuators (113).

12. A thermoscopic unit according to Claim 11 characterised in that the actuators (113) are aligned for simultaneous axial displacement in opposed senses.

13. A thermostatic device comprising a mixing valve (200) for hot and cold water adapted for operation to maintain constant a selected water temperature by means of a thermoscopic unit according to any one of the preceding Claims.

14. A thermostatic device according to Claim 13 characterised in that the thermoscopic unit is housed in a mixing chamber (204) and is operatively connected to a proportioning valve (203) for controlling the relative proportions of hot and cold water admitted to the mixing chamber (204).

15. A thermostatic device according to Claim 13 or Claim 14 characterised in that the thermoscopic unit is operated against a high load, for example up to 90 Newtons, provided by a return spring or similar resilient biasing means.

## Patentansprüche

1. Thermoskopische Einheit für eine thermostatische Vorrichtung, wie beispielsweise ein Mischventil einer sanitären Einrichtung, wobei die Einheit einen Führungsteil (8; 108) und ein in dem Führungsteil (8; 108) gleitbares Betätigungsorgan (13; 113) aufweist, das Betätigungsorgan (13; 113) ein Außenende (14; 114) für die betriebsmäßige Verbindung mit einer thermostatischen Einrichtung und ein von dem Außenende (14; 114) durch ein Lager (17; 117) niedriger Reibung getrenntes Innenende (15; 115) aufweist, wobei ferner ein Hohlkörper (1; 101) eine Expansionskammer (2; 102) bildet, welche ein thermisch ansprechendes Material enthält, und eine Membran (3; 103) vorgesehen ist, welche einen elastisch verformbaren Mittelabschnitt (3b; 103b) und einen Randabschnitt (3a; 103a) vergrößerter Dicke am Umfang aufweist, wobei der Randabschnitt (3a; 103a) zwischen dem Körper (1; 101) und dem Führungsteil (8; 108) angeordnet und gehalten ist, um die Expansionskammer (2; 102) zu schließen, und wobei ferner der Mittelabschnitt (3b; 103b) derart angeordnet ist, daß eine Volumenänderung des thermisch ansprechenden Materials auf das Innenende (15; 115) des Betätigungsorgans (13; 113) übertragen wird, dadurch gekennzeichnet, daß das Führungsteil (8; 108) mit einer Bohrung (8a; 108a) gleichmäßigen Querschnitts über die Länge ausgebildet ist, in welcher das Innenende (15; 115) des Betätigungsorgans (13; 113) gleitbar ist.

2. Thermoskopische Einheit nach Anspruch 1, dadurch gekennzeichnet, daß der Mittelabschnitt (3b; 103b) der Membran (3; 103) eine Dicke in dem Bereich zwischen 0,3 mm bis 1,5 mm aufweist.

3. Thermoskopische Einheit nach Anspruch 1 oder 2, dadurch gekennzeichnet, daß der Mittelabschnitt (3b; 103b) der Membran (3; 103) eine konstante Dicke aufweist.

4. Thermoskopische Einheit nach einem der vorstehenden Ansprüche, dadurch gekennzeichnet, daß der Randabschnitt (3a; 103a) der Membran (3; 103) in einer Ausnehmung (12; 112) in dem Körper (1; 101) oder dem Führungsteil (8; 108) angeordnet ist und vorzugsweise eine Übergröße aufweist, um in der Ausnehmung (12; 112) zusammengedrückt zu werden.

5. Thermoskopische Einheit nach einem der vorstehenden Ansprüche, dadurch gekennzeichnet, daß die Expansionskammer (2; 102) an einen Vorratsbehälter (5; 105) außerhalb des Körpers (1; 101) angeschlossen ist, welcher das thermisch ansprechende Material enthält.

6. Thermoskopische Einheit nach einem der vorstehenden Ansprüche, dadurch gekennzeichnet, daß das thermisch ansprechende Material eine Phasenänderung durchläuft und eine im wesentlichen gleichmäßige Volumenänderung pro Einheit der Temperaturänderung innerhalb des Betriebstemperaturbereichs aufweist.

7. Thermoskopische Einheit nach einem der vorstehenden Ansprüche, dadurch gekennzeichnet, daß die thermische Leitfähigkeit des thermisch ansprechenden Materials durch die Zugabe einer Substanz verbessert ist, welche eine hohe thermische Leitfähigkeit aufweist, wie beispielsweise fein verteilte Metallteilchen oder Metallstaub, beispielsweise Kupferstaub.

8. Thermoskopische Einheit nach einem der vorstehenden Ansprüche, dadurch gekennzeichnet, daß das Innenende (15; 115) des Betätigungsorgans (13; 113) aus einem elastomeren Material ähnlich der Membran (3; 103) hergestellt ist, beispielsweise Gummi, und daß das Außenende (14; 114) des Betätigungsorgans (13; 113) aus korrosionswiderstandsfähigem Material, beispielsweise rostfreiem Stahl, hergestellt ist.

9. Thermoskopische Einheit nach einem der vorstehenden Ansprüche, dadurch gekennzeichnet, daß das Lager (17; 117) niedriger Reibung eine Scheibe oder einen Ring (17; 117) aus Material niedriger Reibung, beispielsweise PTFE, aufweist.

10. Thermoskopische Einheit nach einem der vorstehenden Ansprüche, dadurch gekennzeichnet, daß das Außenende (14; 114) des Betätigungsorgans (13; 113) bezüglich des Führungsteils (8; 108) durch eine flexible Kappe (16; 116) abgedichtet ist.

11. Thermoskopische Einheit nach einem der vorstehenden Ansprüche, dadurch gekennzeichnet, daß die Expansionskammer (102) an einander gegenüberliegenden Enden des Körpers (101) durch ein Paar von Membranen (103) abgedichtet ist, um die Volumenänderung des thermisch ansprechenden Materials an ein entsprechendes Paar von Betätigungsorganen (113) zu übertragen.

12. Thermoskopische Einheit nach Anspruch 11, dadurch gekennzeichnet, daß die Betätigungsorgane (113) für eine gleichzeitige axiale Verschiebung in entgegengesetzten Richtungen ausgerichtet sind.

13. Thermostatische Einheit mit einem Mischventil (200) für heißes und kaltes Wasser, welches betreibbar ist, um eine konstante gewählte Wassertemperatur mittels einer thermoskopischen Einheit nach einem der vorstehenden Ansprüche aufrechtzuerhalten.

14. Thermostatische Einrichtung nach Anspruch 13, dadurch gekennzeichnet, daß die thermoskopische Einheit in einer Mischkammer (204) angeordnet ist und betriebsmäßig mit einem Dosierventil (203) verbunden ist, um die Relativanteile von heißem und kaltem Wasser, welches in die Mischkammer (204) eingelassen wird, zu steuern.

15. Thermostatische Einrichtung nach Anspruch 13 oder 14, dadurch gekennzeichnet, daß die thermoskopische Einheit gegen eine große Kraft, beispielsweise bis zu 90 Newton, betrieben wird, welche durch eine Rücklauffeder oder ähnliche nachgiebige Federeinrichtung erzeugt wird.

## Revendications

1. Unité thermoscopique pour dispositif thermostatique tel qu'une vanne de mélange pour un appareil d'hygiène corporelle, l'unité comprenant un élément de guidage (8; 108), une commande (13; 113) susceptible de glisser dans l'élément de guidage (8; 108), la commande (13; 113) ayant une extrémité externe (14; 114) susceptible de se raccorder, en service, à un dispositif thermostatique et une extrémité interne (15; 115) séparée de l'extrémité externe (14; 114) par un palier à faible frottement (17; 117), un corps creux (1; 101) définissant une chambre d'expansion (2; 102) contenant une matière sensible à la chaleur, et un diaphragme (3; 103) ayant une partie centrale (3b; 103b) déformable élastiquement et une partie de bord périphérique (3a; 103a) de plus grande épaisseur, la partie de bord (3a; 103a) étant disposée et retenue entre le corps (1; 101) et l'élément de guidage (8; 108) pour fermer la chambre d'expansion (2; 102) et la partie centrale (3b; 103b) étant agencée pour transmettre tout changement de volume de la matière sensible à la chaleur à l'extrémité interne (15; 115) de la commande (13; 113), caractérisée en ce que l'élément de guidage (8; 108) présente un alésage (8a; 108a) de section transversale uniforme sur toute la longueur sur laquelle l'extrémité interne (15; 115) de la commande (13; 113) peut glisser.

2. Unité thermoscopique selon la revendication 1, caractérisée en ce que la partie centrale (3b; 103b) du diaphragme (3; 103) a une épaisseur de 0,3 à 1,5 mm.

3. Unité thermoscopique selon la revendication 1 ou 2, caractérisée en ce que la partie centrale (3b; 103b) du diaphragme (3; 103) a une épaisseur constante.

4. Unité thermoscopique selon l'une quelconque des revendications précédentes, caractérisée en ce que la partie de bord (3a; 103a) du diaphragme (3; 103) est disposée dans un évidement (12; 112) du corps (1; 101) ou de l'élément de guidage (8; 108), et est de préférence surcalibrée de manière à être comprimée dans l'évidement (12; 112).

5. Unité thermoscopique selon l'une quelconque des revendications précédentes, caractérisée en ce que la chambre d'expansion (2; 102) est connectée à un réservoir (5; 105) agencé à l'extérieur du corps (1; 101) et contenant la matière sensible à la chaleur.

6. Unité thermoscopique selon l'une quelconque des revendications précédentes, caractérisée en ce que la matière sensible à la chaleur subit une variation de phase et présente une variation sensiblement uniforme en volume par unité de variation de température sur la plage de températures opérationnelles.

7. Unité thermoscopique selon l'une quelconque des revendications précédentes, caractérisée en ce que la conductibilité thermique de la matière sensible à la chaleur est renforcée par l'addition d'une substance ayant une conductibilité thermique élevée telle que des particules métalliques finement divisées ou de la poussière métallique, par exemple de la poussière de cuivre.

8. Unité thermoscopique selon l'une quelconque des revendications précédentes, caractérisée en ce que l'extrémité interne (15; 115) de la commande (13; 113) est constituée d'une matière élastomère similaire à celle du diaphragme (3; 103), par exemple du caoutchouc, et l'extrémité externe (14; 114) de la commande (13; 113) est constituée d'une matière résistant à la corrosion, par exemple de l'acier inoxydable.

9. Unité thermoscopique selon l'une quelconque des revendications précédentes, caractérisée en ce que le palier à faible frottement (17; 117) comprend un disque ou une rondelle (17; 117) constitué(e) d'une matière à faible frottement, par exemple du PTFE.

10. Unité thermoscopique selon l'une quelconque des revendications précédentes, caractérisée en ce que l'extrémité externe (14; 114) de la commande (13; 113) est scellée par rapport à l'élément de guidage (8; 108) par une nacelle flexible (16; 116):

11. Unité thermoscopique selon l'une quelconque des revendications précédentes, caractérisée en ce que la chambre d'expansion (102) est fermée aux extrémités opposées du corps (101) par deux diaphragmes (103) pour transmettre toute variation de volume de la matière sensible à la chaleur à deux commandes correspondantes (113).

12. Unité thermoscopique selon la revendication 11, caractérisée en ce que les commandes (113) sont alignées pour effectuer un déplacement axial simultané dans des sens opposés.

13. Dispositif thermostatique comprenant une vanne de mélange (200) pour l'eau chaude et l'eau froide, susceptible de fonctionner pour maintenir à un niveau constant une température de l'eau sélectionnée à l'aide d'une unité thermoscopique selon l'une quelconque des revendications précédentes.

14. Dispositif thermostatique selon la revendication 13, caractérisé en ce que l'unité thermoscopique est logée dans une chambre de mélange (204) et est connectée en service à une vanne de dosage (203) pour commander les proportions relatives d'eau chaude et d'eau froide admises dans la chambre de mélange (204).

15. Dispositif thermostatique selon la revendication 13 ou 14, caractérisé en ce que l'unité thermoscopique est mise en service à l'encontre d'une charge élevée, par exemple jusqu'à 90 Newtons, appliquée par un ressort de rappel ou un moyen de sollicitation élastique similaire.
